# EUROPÄISCHE PATENTANMELDUNG

(11) **EP 4 332 398 A1**
(43) Veröffentlichungstag der Anmeldung: **06.03.2024**
(21) Anmeldenummer: 22193351.8
(22) Anmeldetag: 31.08.2022
(51) Int. Cl.: F16C 33/58, F16C 33/64, B33Y 80/00, F16C 25/06

(54) **GETRIEBELAGERUNG FÜR EINE WINDKRAFTANLAGE**

(71) Anmelder: Flender GmbH, 46395 Bocholt (DE)
(72) Erfinder: Wiesker, Sebastian, 46395 Bocholt (DE); Furtmann, Alexander, 46395 Bocholt (DE); Hambrecht, Ralf, 46395 Bocholt (DE); Klein, Andreas, 46395 Bocholt (DE)
(74) Vertreter: Michalski Hüttermann & Partner Patentanwälte mbB

(57) **Zusammenfassung**

Maschinenanordnung 10 zum drehenden Übertragen einer Antriebsleistung, mit einem Gehäuseelement 12, 120 und einem Rotationselement 14, 118, wobei das Rotationselement 14, 118 zumindest über eine Wälzlageranordnung 16 mit auf Lagerlaufbahnen 18 abrollenden Wälzkörpern 20 in dem Gehäuseelement 12, 120 um eine Drehachse D drehbar gehalten ist. Zumindest eine der Lagerlaufbahnen 18 ist durch einen den jeweiligen Wälzkörpern 20 zugewandten Strukturbereich 22 des Gehäuseelements 12, 120 und/oder des Rotationselements 14, 118 gebildet. Die Lagerlaufbahn ist inhärenter Bestandteil eines Strukturelements des Gehäuseelements oder des Rotationselements. Verglichen mit herkömmlich eingesetzten Lagerringen hat eine Funktionsintegration der Abrolleigenschaften eines diskreten Wälzlagers mit den Eigenschaften des Gehäuseelement 12, 120 oder des Rotationselements 14, 118 stattgefunden.

## Beschreibung

Die Erfindung betrifft eine Maschinenanordnung für eine Windkraftanlage zum drehenden Übertragen einer Antriebsleistung, mit einem Gehäuseelement und einem Rotationselement, wobei das Rotationselement zumindest über eine Wälzlageranordnung mit auf Lagerlaufbahnen abrollenden Wälzkörpern in dem Gehäuseelement um eine Drehachse D drehbar gehalten ist.

Bei dem Rotationselement kann es sich beispielsweise um eine ein Drehmoment übertragende Welle oder auch um einen in einem Getriebegehäuse umlaufenden Planetenträger handeln. Ein Antriebsstrang, der derartige Komponenten einschließt, kann beispielsweise in einer Windkraftanlage im Kraftfluss zwischen einem Rotor und einem Generator liegen. Der Antriebsstrang enthält in der Regel ein Planentengetriebe zur Übertragung eines Antriebsmoments von dem Rotor auf den Generator. Lagerungen von Planetenträgern in Gehäusen solcher Planetengetriebe sind entweder mit Zylinderrollenlagern oder in jüngster Zeit mit Kegelrollenlagern ausgeführt. Die Leistungsdichte eines solchen Antriebsstrangs und der verbauten Komponenten steigt fortlaufend. Im Hinblick auf die Wälzlageranordnungen wird bei den Lagerringen hochwertiger und teurer Lagerstahl eingesetzt, wobei durch die Verwendung dünnerer Lagerringe der Kostennachteil zumindest teilweise kompensiert werden kann. Sowohl die weichen Strukturen als auch die dünnwandigen Lagerringe führen vermehrt dazu, dass das Phänomen des Lagerringwanderns, insbesondere der äußeren Lagerringe, gegenüber der umgebenden Struktur auftritt. Als Abhilfemaßnahme kann beispielsweise eine formschlüssige Verdrehsicherung vorgesehen werden. Aber auch hier ist bei weiter steigender Leistungsdichte zu erwarten, dass eine formschlüssige Verdrehsicherung die steigenden Wanderkräfte nicht mehr aufnehmen kann und die zunehmend dünnwandigeren Lagerringe nicht mehr ausreichend Material bieten beispielsweise eine Passfedernut aufzunehmen. Es besteht folglich ein Bedürfnis insbesondere im Bereich der Lagerringe der steigenden Leistungsdichte adäquat Rechnung zu tragen.

Es ist die Aufgabe der Erfindung Maßnahmen aufzuzeigen, das Phänomen des Lagerringwanderns in dem beschriebenen Umfeld zu verhindern und durch Gewichtsabsenkung die Leistungsdichte zu erhöhen.

Die Lösung der Aufgabe erfolgt durch eine Maschinenanordnung mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Maschinenanordnung zum drehenden Übertragen einer Antriebsleistung, mit einem Gehäuseelement und einem Rotationselement, wobei das Rotationselement zumindest über eine Wälzlageranordnung mit auf Lagerlaufbahnen abrollenden Wälzkörpern in dem Gehäuseelement um eine Drehachse D drehbar gehalten ist und zumindest eine der Lagerlaufbahnen durch einen den jeweiligen Wälzkörpern zugewandten Strukturbereich des Gehäuseelements und/oder des Rotationselements gebildet ist.

Der Begriff Maschinenanordnung ist breit zu verstehen. Es ist ein Gehäuseelement vorgesehen, bei dem es sich um einen Gehäusedeckel, einen Anschlussflansch, ein drehmomentabstützendes Bauteil, ein rohr- bzw. röhrenartiges Bauteil oder dergleichen handeln kann. Das Gehäuseelement kann mehrteilig ausgeführt sein und muss nicht zwingend bezüglich eines Bodens absolut unbeweglich angeordnet sein; es kann beispielsweise dreh- oder schwenkbar gegenüber einem Boden angeordnet sein. Bei dem Rotationselement kann es sich beispielsweise um eine Welle, eine Hohlwelle, ein käfigförmiges und drehendes Antriebselement, z.B. Antriebsflansch, einen Planetenträger oder dergleichen handeln. Die Wälzlageranordnung kann als angestellte und unter einer Vorspannung montierte Lagerpaarung vorgesehen sein. Die Wälzlageranordnung kann auch als gepaarter Lagersatz zur einseitigen Lagerung ausgeführt sein. Für das Gehäuseelement und das Rotationselement kann auch vorgesehen sein, dass es sich um ineinander geschachtelte Rotationselemente handelt.

Unter einem Strukturbereich des Gehäuseelements bzw. des Rotationselements wird zumindest ein tragender Bereich des jeweiligen Elements verstanden. Ein Strukturbereich umfasst jedenfalls einen Bereich, der mittels eines additiven Fertigungsverfahren an bzw. in die Struktur des Gehäuseelements bzw. des Rotationselements angefügt wurde. Bei einem Gehäuseelement kann es sich bei einem Strukturbereich beispielsweise um einen Gehäusewandungsbereich handeln. Wenn das Gehäuseelement eine Gehäusebohrung ausbildet, kann die die Gehäusebohrung umgebende Bohrungswandung als Strukturbereich bezeichnet werden. Bei einem Rotationselement, wenn es ich bei diesem beispielsweise um eine Welle oder einen Antriebflansch handelt, wird der Strukturbereich von einem Bereich gebildet, über den das Rotationselement gegenüber dem Gehäuseelement gehalten, aufgenommen, gelagert oder geführt ist.

Eine Lagerlaufbahn ist die Fläche eines Bauteils auf der bei dem Einsatz von Wälzkörpern diese unmittelbar abrollen. Eine Lagerlaufbahn umfasst also zumindest eine Abrollbahn, auf der Wälzkörper zum Abrollen vorgesehen sein. Die eigentliche Lagerlaufbahn ist gegenüber dem Bauteil, auf oder an dem sie sich befindet, sehr dünn gehalten. Eine Lagerlaufbahn umfasst neben der zumindest einen Abrollbahn auch einen Tiefenbereich in einer Größenordnung von 0µm bis beispielsweise 40µm, der unter der Oberfläche der Abrollbahn liegt und in dem Druckeigenspannungen oberhalb einer bestimmten Mindesthöhen, beispielsweise mindestens ca. 400 MPa, in einer Betriebssituation herrschen. Bei jeder der hier beschriebenen Ausgestaltungen ist zumindest eine Lagerlaufbahn inhärenter Bestandteil des Strukturbereichs des Gehäuseelements oder alternativ oder zusätzlich des Rotationselements. Lagerlaufbahn und Strukturelement sind einstückig miteinander verbunden und können nicht zerstörungsfrei voneinander getrennt werden. Es reicht nicht aus, wenn die Oberfläche des Strukturelements bspw. durch Einsatzhärten oder Aufkohlen gehärtet ist, da dies zwar zu einer anderen chemischen Zusammensetzung als die Grundstruktur führt, allerdings nicht zu einem mit dem Strukturelement verbundenen anderen Material.

Indem die Lagerlaufbahn inhärenter Bestandteil eines Strukturelements des Gehäuseelements oder des Rotationselements verglichen mit herkömmlich eingesetzten Lagerringen ist, hat eine Funktionsintegration der Abrolleigenschaften, wie bspw. Wälzfestigkeit, eines diskreten Wälzlagers, insbesondere eines diskreten Lagerrings, mit den Eigenschaften des Gehäuseelement oder des Rotationselements stattgefunden. Es ergibt sich in vorteilhafter Weise die Möglichkeit zu einer Steigerung der Leistungsdichte und zwar infolge der geringeren radialen Bauhöhe und des geringeren Gewichts durch den Entfall des diskreten Lagerrings. Ein entscheidender Vorteil besteht darin, dass kein Lagerringwandern mehr stattfinden kann, da die Lagerlaufbahn inhärenter Bestandteil eines Strukturbereichs ist. Zudem ergibt ich auch eine Kostenersparnis, da nur noch ein verminderter Einsatz von hochpreisigem Lagerstahl erforderlich ist. Zudem reduziert sich die Anzahl an Arbeitsschritten in der Montage, da pro Lagerlaufbahn zwei Passungen entfallen und der Montageaufwand für enge Passungen entfällt. Durch die reduzierte Anzahl an Arbeitsschritten und weniger Bauteilschnittstellen, die in jedem einzelnen Fall das Risiko falsch ausgelegter bzw. falsch gefertigter Lagersitze und -bohrungen in sich bergen, ergibt sich ein verringertes Fehlerrisiko bzw. Ausfallrisiko.

In einer bevorzugten Ausgestaltung ist die zumindest eine Lagerlaufbahn durch einen integral mit dem Strukturbereich verbundenen Werkstoff gebildet. Hier lässt sich über den Werkstoff in dem Strukturbereich eine Lagerlaufbahn mit einer erhöhten Wälzfestigkeit erzeugen. In einer konkreten Ausgestaltung kann vorgesehen sein, dass der Werkstoff auf den Strukturbereich additiv aufgebracht ist. Ein additives Aufbringen von Material auf den Strukturbereich kann beispielsweise durch Laserauftragsschweißen, Kaltgasspritzen und/oder Thermisches Spritzen erfolgen. Hierbei ist insbesondere bevorzugt, wenn ein Werkstoff mit einer erhöhten Wälzfestigkeit zu Einsatz kommt. Ein additiv aufgebrachter, aber dennoch integral mit dem Strukturbereich verbundener Werkstoff erlaubt eine gezielte Anpassung der Lagereigenschaften des Gesamtbauteils an die jeweiligen Anforderungen.

In einer bevorzugten fertigungstechnisch bezogenen Ausgestaltung hat der auf den Strukturbereich aufgebrachte Werkstoff eine die Oberflächenhärte beeinflussende Materialbehandlung erfahren. Durch die Materialbehandlung erfolgt beispielsweise ein Härten über eine lokal wirksame Wärmebehandlung. Auch ein Warmwalzen kann durchgeführt werden.

In einer zudem bevorzugten Ausgestaltung ist zumindest ein sich in einer axialen Richtung an die zumindest eine Lagerlaufbahn anschließender Lagerbord vorgesehen. Hierbei ist die Bordfläche derart integraler Bestandteil, dass auch der Bord integral mit dem Strukturbereich verbunden ist. Der Bord kann mit dem gleichen Verfahren wie die Lagerlaufbahn hergestellt werden oder der Bord kann als separates Bauteil ausgeführt sein.

In einer möglichen Ausgestaltung der Maschinenanordnung kann die Wälzlageranordnung ein erstes Wälzlager und ein zweites Wälzlager aufweisen, wobei eine innere und eine äußere Lagerlaufbahn eines der Wälzlager und eine innere Lagerlaufbahn des anderen Lagers durch eine Strukturbereich des Gehäuseelements und/oder des Rotationselements gebildet sind und eine äußere Lagerlaufbahn des anderen Lagers durch einen Lageraußenring gebildet ist. Hierdurch ist es möglich, dass über den einen diskreten Lageraußenring eine Lagervorspannung bzw. ein Lagerspiel der gesamten Lageranordnung einstellbar ist. Dies ist insbesondere dann von Vorteil, wenn das erste und das zweite Wälzlager jeweils als Kegelrollenlager ausgeführt sind. Neben Kegelrollenlager können auch andere Lagerarten, die kombinierte axiale und radiale Belastungen aufnehmen können, zum Einsatz kommen, wie z.B. Momentenlager, Schrägkugellager, Schrägzylinderrollenlager, oder Schräg-Axiallager. Ebenso könnte anstatt des verschiebbaren Lageraußenrings auch eine weitere verschiebbare Strukturkomponente mit integrierter Wälzlagerlaufbahn, wie z.B. einer angrenzenden Getriebestufe oder eines Generators, eingesetzt werden, um die Vorspannung der Lagerung einzustellen.

In einer weiteren möglichen Ausgestaltung der Maschinenanordnung kann die Wälzlageranordnung ein erstes Wälzlager und ein zweites Wälzlager aufweisen, wobei jeweils eine innere Lagerlaufbahn und eine äußere Lagerlaufbahn der Wälzlager durch einen Strukturbereich des Gehäuseelements und/oder des Rotationselements gebildet ist. Hierbei ist bevorzugt, dass das erste und das zweite Wälzlager jeweils als Kegelrollenlager ausgeführt sind, wobei eine Lagervorspannung durch ein Distanzelement in einer axialen Maßkette des Gehäuseelements und/oder des Rotationselements einstellbar ist.

In einer alternativen Ausgestaltung kann vorgesehen sein, dass das erste und das zweite Wälzlager jeweils als Zylinderrollenlager ausgeführt sind.

In einer weiteren Ausgestaltung kann vorgesehen werden, dass das erste und das zweite Wälzlager auf einer Seite zu einem Momentenlager, z.B. auf Basis von Kegel- oder Zylinderrollenlager, zusammengefasst werden und dessen Vorspannung entsprechend obiger Konzepte in vergleichbarer Weise eingestellt wird.

Die Aufgabe wird zudem gelöst durch einen Antriebsstrang für eine Windkraftanlage zur drehmomentübertragenden Verbindung eines Rotors mit einem Generator, umfassend eine Hauptlagereinheit mit einem Lagergehäuse und einer Hauptwelle und ein über die Hauptwelle angetriebenes Getriebe mit einem als Getriebegehäuse ausgebildeten Gehäuseelement und einem als Planetenträger ausgebildeten Rotationselement, wobei das Lagergehäuse und die Hauptwelle und/oder das Getriebegehäuse und der Planetenträger als Maschinenanordnung nach einem der oben beschriebenen Ausführungsformen ausgebildet sind.

Gleichermaßen wird die Aufgabenstellung gelöst durch eine Windkraftanlage, mit einem Rotorflansch mit einem Rotor und einem Generator, wobei ein an einem Maschinenträger gehaltener und den Rotorflansch mit dem Generator verbindender Antriebsstrang vorgesehen ist und der Antriebsstrang wie zuvor beschrieben ausgebildet ist.

Die Lösung der zugrundeliegende Aufgabenstellung erfolgt zudem durch ein Datenagglomeration mit in einer gemeinsamen Datei zusammengefassten oder über verschiedene Dateien verteilten Datenpaketen zur Abbildung der dreidimensionalen Formgestaltung und/oder der Wechselwirkungen sämtlicher in einer wie vorstehend beschriebenen Maschinenanordnung vorgesehenen Bestandteile, wobei die Datenpakete dazu hergerichtet sind bei einer Verarbeitung durch eine Datenverarbeitungseinrichtung eine additive Herstellung der Bestandteile der Maschinenanordnung, insbesondere durch 3D-Druck mittels eines 3D-Druckers, und/oder eine Simulation der Funktionsweise der Maschinenanordnung durchzuführen. Dies ermöglicht eine kostengünstige Herstellung von Prototypen und/oder computerbasierten Simulationen, um die Funktionsweise der Maschinenanordnung zu studieren, Probleme im konkreten Anwendungsfall zu identifizieren und Verbesserungen zu finden. Weiterhin beinhaltet ein 3D-Druck beispielsweise ein Spritzverfahren, bei dem ein additiv hinzuzufügendes Material mit einer Düse aufgetragen wird, wie z.B. Laserauftragsschweißen, Thermisches Spritzen oder Kaltgasspritzen.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Darstellung einer Windkraftanlage in einer ersten Ausführung,
Fig. 2: eine schematische Darstellung einer Windkraftanlage in einer weiteren Ausführung,
Fig. 3: eine Detaillierung einer Lagerausgestaltung in einem Getriebe für eine Windkraftanlage nach Fig. 1 oder 2,
Fig. 4: eine Detaillierung einer weiteren Lagerausgestaltung in einem Getriebe für eine Windkraftanlage nach Fig. 1 oder 2,
Fig. 5: eine schematische Darstellung einer Windkraftanlage in einer weiteren Ausführung und
Fig. 6: eine Detaillierung einer Lagerausgestaltung in einem Getriebe für eine Windkraftanlage nach Fig. 5.

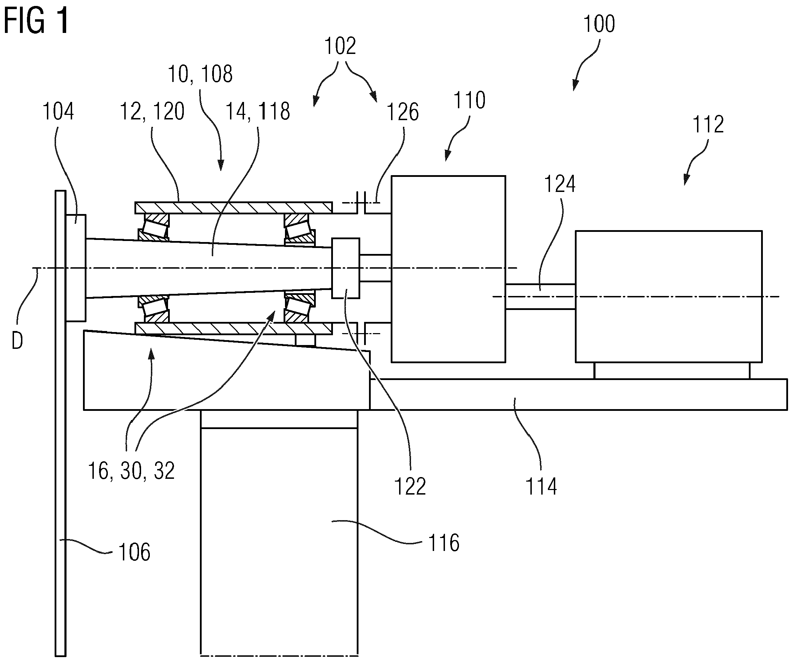

Die Figur 1 zeigt in schematischer und nicht maßstabsgetreuer Darstellung eine Windkraftanlage 100 in einer möglichen Ausführung. Wesentliches Element der Windkraftanlage 100 ist ein Antriebstrang 102, der vorliegend strukturell einen Rotorflansch 104 mit einem Rotor 106, eine Hauptlagereinheit 108, ein Getriebe 110 und einen Generator 112 umfasst. Über einen Maschinenträger 114 werden zumindest die Hauptlagereinheit 108 und der Generator 112 über einen Turm 116 gegenüber dem, nicht dargestellten, Boden abgestützt.

Die Hauptlagereinheit 108 umfasst eine Hauptwelle 118, die über eine Wälzlageranordnung 16 gegenüber einem Lagergehäuse 120 der Hauptlagereinheit 108 drehbar um eine Drehachse D gelagert ist. An einem Ende der Hauptwelle 118 ist der Rotorflansch 104 und an diesem der Rotor 106 gehalten. Das andere Ende der Hauptwelle 118 ist über eine Kupplung 122 antriebsmäßig mit dem Getriebe 110 verbunden, um ein von dem Rotor 106 aufgebrachtes Antriebsmoment in das Getriebe 110 einzuleiten. Das Getriebe 110 kann als Planetengetriebe mit einer oder mehreren Planetenstufen ausgeführt sein. Das Getriebe 110 ist über eine Generatorwelle 124 antriebsmäßig mit dem Generator 112 verbunden. Über einen Flansch 126 ist das Lagergehäuse 120 mit dem Getriebe 110 verbunden. Ein Reaktionsmoment des Getriebes 110 ist über den Flansch 126 gegenüber dem Maschinenträger 114 abgestützt.

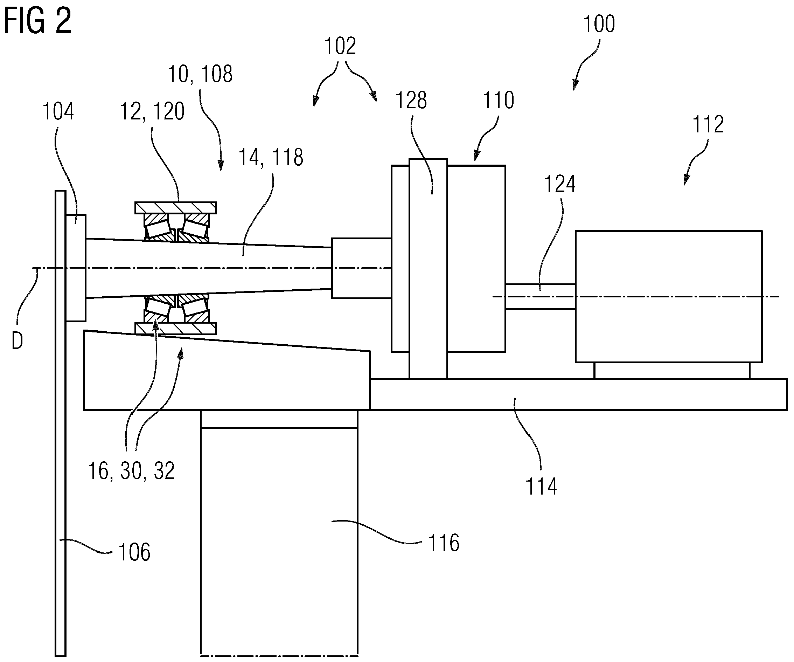

Die Figur 2 zeigt in schematischer und nicht maßstabsgetreuer Darstellung eine Windkraftanlage 100 in einer weiteren möglichen Ausführung. Der Unterschied zu der Ausführung der Figur 1 besteht darin, dass das Getriebe 110 nicht mittelbar über die Hauptlagereinheit 108 gegenüber dem Maschinenträger 114 abgestützt ist, sondern über eine Drehmomentstütze 128 des Getriebes 110. Die Verbindung zwischen der Hauptwelle 118 und dem Getriebe 110 kann über eine starre Welle-Nabe-Verbindung ausgeführt sein, wobei die Welle-Nabe-Verbindung über das Zusammenwirken einer vollen Hauptwelle 118 mit einer Planetenträgerhohlwelle über eine Schrumpfscheibe realisiert ist.

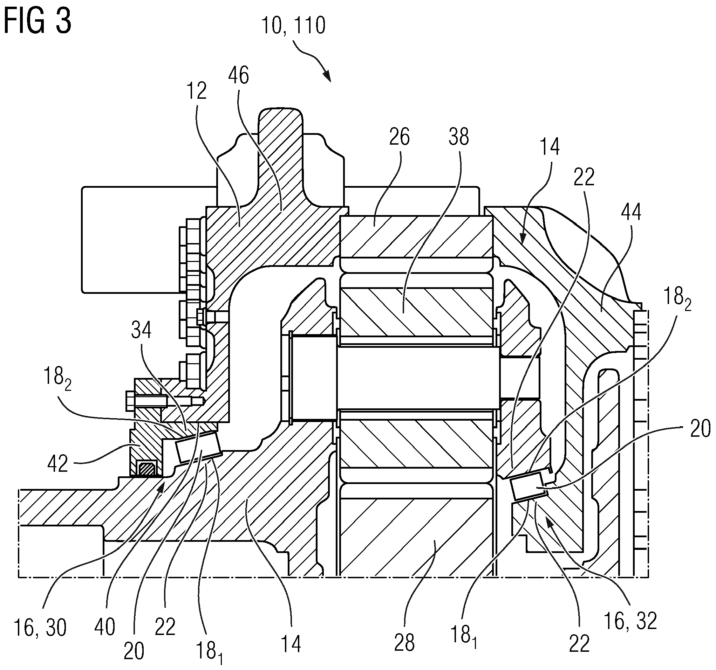

Die Figur 3 zeigt eine Detaillierung des in den Figuren 1 und 2 lediglich strukturell dargestellten Getriebes 110. Das Getriebe 110 ist als Planetengetriebe ausgeführt, von dem lediglich eine Planetenstufe dargestellt ist. Das Getriebe 110 umfasst eine Maschinenanordnung 10, die wiederum ein Gehäuseelement 12 und ein Rotationselement 14 des Getriebes 110 umfasst. Das Gehäuseelement 12 kann mehrteilig ausgeführt sein; es kann beispielsweise ein Gehäuseteil 44 und ein mit diesem über eine Verschraubung verbundenes weiteren Gehäuseteil 46 zur Abstützung eines Drehmoments umfassen. Bei dem Rotationselement 14 kann es sich beispielsweise um einen Planetenträger der ersten Planetenstufe handeln. Das Rotationselement 14 ist über eine Wälzlageranordnung 16 mit auf Lagerlaufbahnen 18 abrollenden Wälzkörpern 20 in dem Gehäuseelement 12 um die Drehachse D drehbar gehalten. Das als Planetenträger ausgebildete Rotationselement 14 trägt Planetenräder 38, die nach radial außen mit einem Hohlrad 26 und nach radial innen mit einem Sonnenrad 28 kämmen. Das Rotationselement 14 steht eingangsseitig, d.h. in der gezeigten Darstellung links, in einer Antriebsverbindung mit der zu Figuren 1 und 2 beschriebenen Hauptwelle 118.

In der Figur 3 ist eine Ausgestaltung der Maschinenanordnung 10 gezeigt, bei der die Wälzlageranordnung 16 ein erstes Wälzlager 30 und ein zweites Wälzlager 32 aufweist. Die Wälzlager 30, 32 sind als Kegelrollenlager ausgeführt. Lagerlaufbahnen 18 der Wälzlager 30, 32 werden durch einen den jeweiligen Wälzkörpern 20 zugewandten Strukturbereich 22 des Gehäuseelements 12 und des Rotationselements 14 gebildet. Eine innere Lagerlaufbahn 18₁ des ersten Wälzlagers 30 ist durch einen Strukturbereich 22 des Rotationselements 14, d.h. des Planetenträgers, gebildet. Zudem ist eine äußere Lagerlaufbahn 18₂ des zweiten Wälzlagers 32 ebenfalls durch einen Strukturbereich 22 des Rotationselements 14 gebildet und eine innere Lagerlaufbahn 18₁ des Wälzlagers 32 ist durch einen Strukturbereich 22 des Gehäuseelements 12 gebildet. Die äußere Lagerlaufbahn 18₂ des ersten Wälzlagers 30 befindet sich auf einem Lageraußenring 34, der in eine axiale Lagerbohrung 40 eingesetzt ist und von einem an das Gehäuseelement 12 angesetzten Lagerdeckel 42 in seiner axialen Position festgelegt wird. Über den einen diskreten Lagerring 34 und den Lagerdeckel 42 kann eine Lagervorspannung bzw. eine Lagerspiel der Wälzlageranordnung 16 eingestellt werden.

Die Lagerlaufbahnen 18₁, 18₂, die durch den jeweiligen Strukturbereich 22 des Gehäuseelements 12 oder des Rotationselements 14 gebildet werden, können durch einen integral mit dem Strukturbereich 22 verbundenen Werkstoff gebildet sein. Der Werkstoff ist additiv auf den Strukturbereich 22 aufgebracht. Es kann vorgesehen sein, dass der auf den Strukturbereich 22 aufgebrachte Werkstoff vor Inbetriebnahme eine die Oberflächenhärte beeinflussende bzw. erhöhende Materialbehandlung erfahren hat. Weiterhin kann vorgesehen sein, dass die Lagerlaufbahnen 18 einen oder mehrere Lagerborde ausbilden.

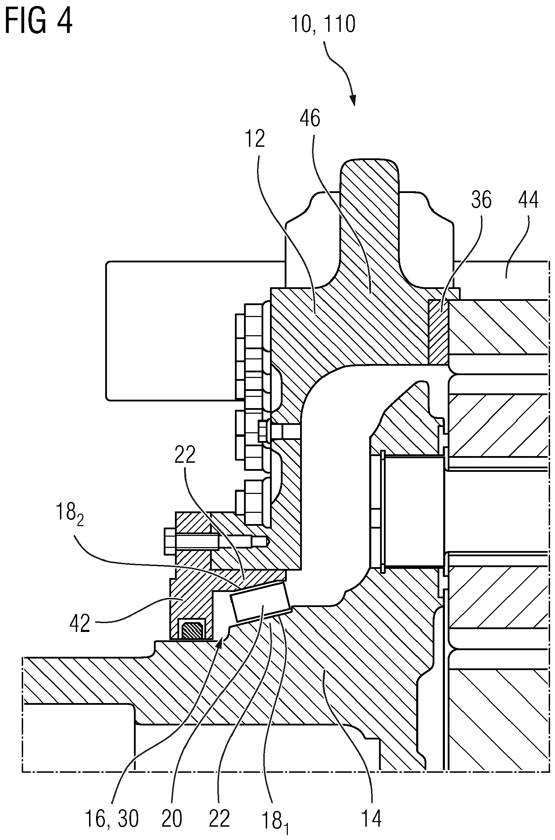

Die Figur 4 zeigt eine weitere Ausgestaltung der Maschinenanordnung 10 und stellt einen modifizierten Ausschnitt der Figur 3 dar. Es ist kein separater Lageraußenring 34, wie zu der Figur 3 beschrieben, vorgesehen, sondern beide inneren und äußeren Lagerlaufbahnen 18₁, 18₂ der beiden Wälzlager 30, 32 werden durch einen Strukturbereich 22 des Rotationselements 14 bzw. des Gehäuseelements 12 gebildet. Es kann zwischen dem Gehäuseteil 44 und dem Gehäuseteil 46 ein umfänglich verlaufendes Distanzelement 36 vorgesehen sein, um die relative axiale Position von beiden Gehäuseteilen 44, 46 zueinander festzulegen. Es können auch Distanzscheiben vorgesehen sein, die einzeln um jede der Flanschschrauben gelegt sind. Über die Anpassung des Distanzelements 36 bzw. die Distanzscheiben kann bei dieser Ausgestaltung der Maschinenanordnung 10 eine Lagervorspannung bzw. ein Lagerspiel der Wälzlageranordnung 16 eingestellt werden.

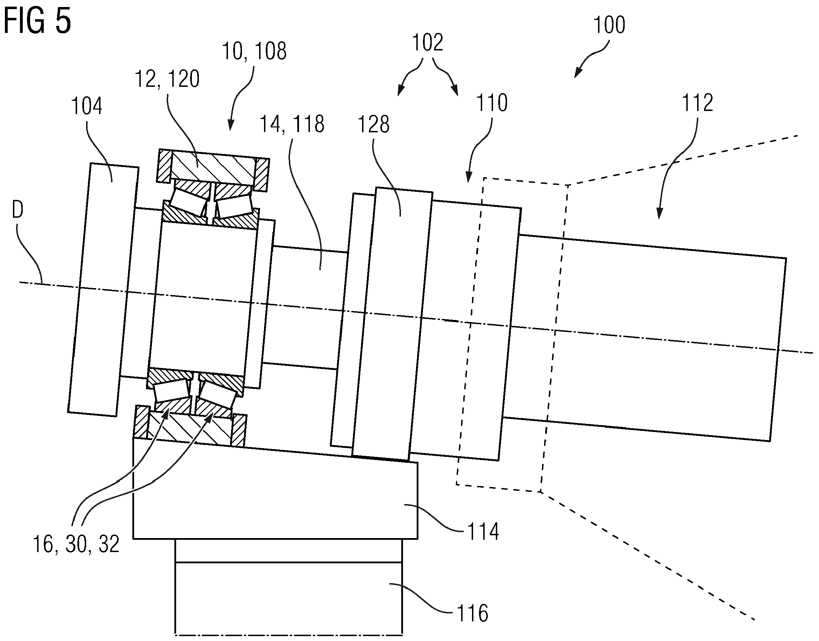

Die Figur 5 zeigt in schematischer und nicht maßstabsgetreuer Darstellung eine Windkraftanlage 100 in einer weiteren möglichen Ausführung. Der Unterschied insbesondere zu der Ausführung der Figur 2 besteht darin, dass das Getriebe 110 und der Generator 112 zu einer integrierten Baugruppe strukturell zusammengefasst sind. Das Getriebe 110, und damit mittelbar der Generator 112, ist über die Drehmomentstütze 128 gegenüber dem Maschinenträger 114 abgestützt. Im Übrigen sind folgende Komponenten des Antriebsstrangs 102 auch vorgesehen: Rotorflansch 104, Mehrblattrotor 106, Hauptlagereinheit 108.

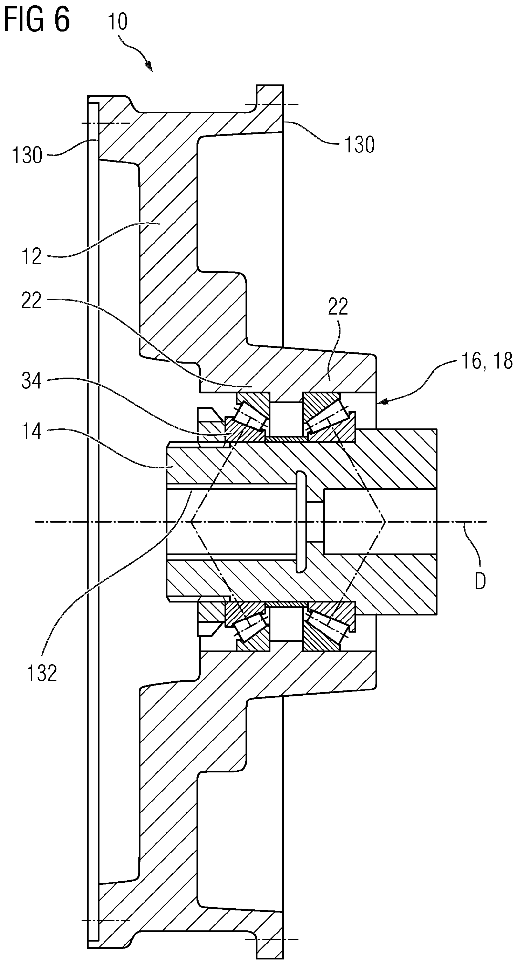

In der Figur 6 ist eine Ausgestaltung der Maschinenanordnung 10 gezeigt, die insbesondere bei einer Windkraftanlage 100 mit zu einer integrierten Baugruppe zusammengefassten Getriebe 110 und Generator 112 Anwendung finden kann, wie in der Figur 5 dargestellt. Die Figur 6 stellt eine Detaillierung des Übergangsbereichs von Getriebe 110 zu Generator 112 dar. Das Gehäuseelement 12 der Maschinenanordnung 10 bildet zu beiden axialen Seiten jeweils einen Flanschbereich 130 aus, über den jeweils ein nicht dargestelltes Hohlrad der in Drehmomentrichtung letzten Planetenstufe des Getriebes 110 und ein nicht dargestellter Stator des Generators 112 gehalten ist. Das Rotationselement 14 der Maschinenanordnung 10 ist vorliegend durch eine Hohlwelle gebildet, die zur einen axialen Seite über eine Kurzverzahnung 132 mit einer nicht dargestellten Sonnenwelle der in Drehmomentrichtung letzten Planetenstufe des Getriebes 110 und zur anderen axialen Seite mit einem nicht dargestellten Rotor des Generators 112 antriebsverbunden ist. Die Hohlwelle 14 ist über die Wälzlageranordnung 16 in dem Gehäuseelement 12 um die Drehachse D drehbar gehalten. Die Wälzlageranordnung 16 ist vorliegend als in O-Anordnung angestellte Kegelrollenlagerpaarung ausgeführt und kann gemäß einer der zu Figur 3 oder 4 beschriebenen Ausgestaltungen ausgeführt sein. D.h. entweder sind alle Lagerlaufbahnen 18 integriert mit dem Strukturbereich 22 und einem Distanzelement 36 bzw. Distanzscheiben zur Einstellung der Lagervorspannung bzw. des Lagerspiels ausgeführt - vgl. Figur 4 - oder nur drei Lagerlaufbahnen 18 sind integriert mit dem Strukturbereich 22 ausgeführt und über den einen diskreten Lagerring 34 kann die Lagervorspannung bzw. das Lagerspiel eingestellt werden - vgl. Figur 3. Die Figur 6 stellt vorliegend die der Figur 3 entsprechende Ausgestaltung der Wälzlageranordnung 16 dar.

Unter erneutem Verweis auf die Figuren 1, 2 und 5 kann noch eine weitere Ausgestaltung bzw. Anwendung der Maschinenanordnung 10 vorgesehen sein. Bei dieser kann die Maschinenanordnung 10 derart ausgeführt sein, dass das Gehäuseelement 12 von dem Lagergehäuse 120 der Hauptlagereinheit 108 und das Rotationselement 14 von der Hauptwelle 118 der Hauptlagereinheit 108 gebildet wird. Wie bei den Ausgestaltungen, die zu den Figuren 3 und 4 beschrieben wurden, kann auch die im Bereich der Hauptlagereinheit 108 vorgesehene Maschinenanordnung 10 - vgl. Figur 1 - Wälzlager 30, 32 aufweisen, deren Lagerlaufbahnen 18 durch einen den jeweiligen Wälzkörpern 20 zugewandten Strukturbereich 22 des Lagergehäuses 12 und der Hauptwelle 118 gebildet werden.

### Bezugszeichenliste

- 10: Maschinenanordnung
- 12: Gehäuseelement
- 14: Rotationselement
- 16: Wälzlageranordnung
- 18: Lagerlaufbahn
- 20: Wälzkörper
- 22: Strukturbereich
- 26: Hohlrad
- 28: Sonnenrad
- 30: Wälzlager
- 32: Wälzlager
- 34: Lageraußenring
- 36: Distanzelement
- 38: Planetenräder
- 40: Lagerbohrung
- 42: Lagerdeckel
- 44: Gehäuseteil
- 46: Drehmomentstütze
- 100: Windkraftanlage
- 102: Antrieb strang
- 104: Rotorflansch
- 106: Mehrblattrotor
- 108: Hauptlagereinheit
- 110: Getriebe
- 112: Generator
- 114: Maschinenträger
- 116: Turm
- 118: Hauptwelle
- 120: Lagergehäuse
- 122: Kupplung
- 124: Generatorwelle
- 126: Flansch
- 128: Drehmomentstütze
- 130: Flanschbereich
- 132: Kurzverzahnung

## Patentansprüche

1. Maschinenanordnung (10) zum drehenden Übertragen einer Antriebsleistung, umfassend
ein Gehäuseelement (12, 120) und ein Rotationselement (14, 118), wobei das Rotationselement (14, 118) zumindest über eine Wälzlageranordnung (16) mit auf Lagerlaufbahnen (18) abrollenden Wälzkörpern (20) in dem Gehäuseelement (12, 120) um eine Drehachse D drehbar gehalten ist,
**dadurch gekennzeichnet, dass**
zumindest eine der, insbesondere durch additive Fertigung hergestellte, Lagerlaufbahnen (18) durch einen den jeweiligen Wälzkörpern (20) zugewandten Strukturbereich (22) des Gehäuseelements (12, 120) und/oder des Rotationselements (14, 118) gebildet ist.

2. Maschinenanordnung (10) nach Anspruch 1, **dadurch gekennzeichnet, dass** zumindest eine Lagerlaufbahn (18) durch einen integral mit dem Strukturbereich (22) verbundenen Werkstoff gebildet ist.

3. Maschinenanordnung (10) nach Anspruch 1 oder 2, **dadurch gekennzeichnet, dass** der Werkstoff auf den Strukturbereich (22) additiv aufgebracht ist.

4. Maschinenanordnung (10) nach Anspruch 2 oder 3, **dadurch gekennzeichnet, dass** der Werkstoff, im Vergleich zu einem Grundmaterial des Strukturbereichs (22), eine erhöhte Wälzfestigkeit aufweist.

5. Maschinenanordnung (10) nach Anspruch 2, 3 oder 4, **dadurch gekennzeichnet, dass** der auf den Strukturbereich (22) aufgebrachte Werkstoff eine die Oberflächenhärte beeinflussende Materialbehandlung erfahren hat.

6. Maschinenanordnung (10) nach einem der Ansprüche 1 bis 5, **dadurch gekennzeichnet, dass** zumindest ein sich in einer axialen Richtung an die zumindest eine Lagerlaufbahn (18) anschließender Lagerbord vorgesehen ist.

7. Maschinenanordnung (10) nach einem der Ansprüche 1 bis 6, **dadurch gekennzeichnet, dass** die Wälzlageranordnung (16) ein erstes Wälzlager (30) bzw. erste Lagerlaufbahn (18) und ein zweites Wälzlager (32) bzw. zweite Lagerlaufbahn (18) aufweist, wobei eine innere und eine äußere Lagerlaufbahn (18₁, 18₂) eines der Wälzlager (30, 32) und eine innere Lagerlaufbahn (18₁) des anderen Lagers bzw. die Lagerlaufbahnen (18₁, 18₂) durch einen Strukturbereich des Gehäuseelements (12, 120) und/oder des Rotationselements (14, 118) gebildet sind und eine äußere Lagerlaufbahn (18₂) des anderen Lagers (32, 30) durch einen Lageraußenring (34) gebildet ist.

8. Maschinenanordnung (10) nach Anspruch 7, **dadurch gekennzeichnet, dass** das erste und das zweite Wälzlager (30, 32) jeweils als Kegelrollenlager ausgeführt sind und über den Lageraußenring (34) eine Lagervorspannung und/oder ein Lagerspiel einstellbar ist.

9. Maschinenanordnung (10) nach einem der Ansprüche 1 bis 6, **dadurch gekennzeichnet, dass** die Wälzlageranordnung (16) ein erstes Wälzlager (30) und ein zweites Wälzlager (32) aufweist, wobei jeweils eine innere Lagerlaufbahn (18₁) und eine äußere Lagerlaufbahn (18₂) der Wälzlager durch einen Strukturbereich (22) des Gehäuseelements (12, 120) und/oder des Rotationselements (14, 118) gebildet ist.

10. Maschinenanordnung (10) nach Anspruch 9, **dadurch gekennzeichnet, dass** das erste und das zweite Wälzlager (30, 32) jeweils als Kegelrollenlager ausgeführt sind, wobei eine Lagervorspannung und/oder ein Lagerspiel durch mindestens ein Distanzelement (36) in einer axialen Maßkette des Gehäuseelements (12, 120) einstellbar ist.

11. Maschinenanordnung (10) nach einem der Ansprüche 1 bis 6, **dadurch gekennzeichnet, dass** das erste und das zweite Wälzlager (30, 32) jeweils als Zylinderrollenlager ausgeführt sind.

12. Antriebsstrang (102) für eine Windkraftanlage (100) zur drehmomentübertragenden Verbindung eines Rotors (106) mit einem Generator (112), umfassend eine Hauptlagereinheit (108) mit einem Lagergehäuse (120) und einer Hauptwelle (118) und ein über die Hauptwelle (118) angetriebenes Getriebe (110), wobei das Getriebe (110) den Generator zumindest mittelbar antreibt und ein als Getriebegehäuse ausgebildetes Gehäuseelement (12) und zumindest ein als Planetenträger und/oder als Hohlwelle ausgebildetes Rotationselement (14) aufweist,
**dadurch gekennzeichnet, dass** das Lagergehäuse (120) und die Hauptwelle (118) und/oder das Getriebegehäuse (12) und der zumindest eine Planetenträger (14) und/oder die Hohlwelle (14) als Maschinenanordnung (10) nach einem der vorangegangenen Ansprüche ausgebildet sind.

13. Windkraftanlage (100), umfassend einen Rotorflansch (104) mit einem Rotor (106) und einen Generator (112), wobei ein an einem Maschinenträger (114) gehaltener und den Rotorflansch (104) mit dem Generator (112) verbindender Antriebsstrang (102) vorgesehen ist, **dadurch gekennzeichnet, dass** der Antriebsstrang (102) nach Anspruch 12 ausgebildet ist.

14. Datenagglomeration mit in einer gemeinsamen Datei zusammengefassten oder über verschiedene Dateien verteilten Datenpaketen zur Abbildung der dreidimensionalen Formgestaltung und/oder der Wechselwirkungen sämtlicher in einer Maschinenanordnung (10) nach einem der Ansprüche 1 bis 11 vorgesehenen Bestandteile, wobei die Datenpakete dazu hergerichtet sind bei einer Verarbeitung durch eine Datenverarbeitungseinrichtung eine additive Herstellung der Bestandteile der Maschinenanordnung (10), insbesondere durch 3D-Druck mittels eines 3D-Druckers, und/oder eine Simulation der Funktionsweise der Maschinenanordnung (10) durchzuführen.
